# EUROPEAN PATENT SPECIFICATION

(11) **EP 2 143 631 B1**
(45) Date of publication and mention of the grant of the patent: **04.01.2012**
(21) Application number: 09173886.4
(22) Date of filing: 06.02.2007
(51) Int. Cl.: B63H 5/00, B63H 5/16

(54) **Asymmetric preswirl stator of ship**
Asymmetrischer Vordrallstator eines Schiffes
Stator de tourbillon asymétrique pour navire

(43) Date of publication of application: 13.01.2010
(62) Divisional of application: 07002482.3
(73) Proprietor: DAEWOO SHIPBUILDING & MARINE ENGINEERING CO., LTD, Seoul (KR)
(72) Inventor: Kim, In pyo, Seoul (KR); Park, Jac sang, SEOUL (KR); Park, Jc jun, Gycongsangnam-do (KR); Kim, Moon chan, Busan-si (KR); Kim, Yong soo, Gyeongsangnam-do (KR); Choi, Young bok, Gyeonggi-do (KR); Hwang, Yoon sik, Gyeongsangnam-do (KR); Kim, Sung pyo, Incheon-si (KR)
(74) Representative: Maillet, Alain

(56) References cited:
- DE-U1- 8 314 111
- ES-A1- 2 075 785
- GB-A- 191 327 287
- US-A- 4 798 547
- US-A- 5 209 642

## Description

The present invention relates to an asymmetric preswirl stator of a ship, and more particularly to an asymmetric preswirl stator, which has various asymmetric structures in consideration of wake current characteristics of the hull of a ship and a rotational direction of a propeller of the ship and thus makes the load distribution on the propeller uniform, thereby improving the efficiency and the cavitation property of the propeller.

As part of the improvement of the propulsion efficiency of a ship, a preswirl stator is installed on the ship so that a rotating propeller can exhibit the maximum propulsion efficiency with a velocity component of a flow of water coming into the propeller in a tangential direction.

The above preswirl stator causes a flow of water at the stem of the ship to be bent in a direction opposite to the rotational direction of the propeller and to be returned to the propeller, when the propeller rotates and the hull of the ship runs forward, thus reducing a rotational flow generated at the rear of the propeller and improving the propulsion efficiency of the propeller. Generally, when the propeller is rotated, a rotational flow in the same direction as the rotational direction of the propeller is generated in the water at the rear of the propeller. The rotational flow is not used to propel the hull, but reduces the propulsion efficiency of the propeller as much as the amount of the energy of the rotational flow. Accordingly, when the rotational flow is reduced, the propulsion efficiency of the propeller is increased as much as the reduced amount of the rotational flow. Thus, in order to generate a rotational flow in a direction opposite to the rotational direction of the propeller, the preswirl stator is installed.

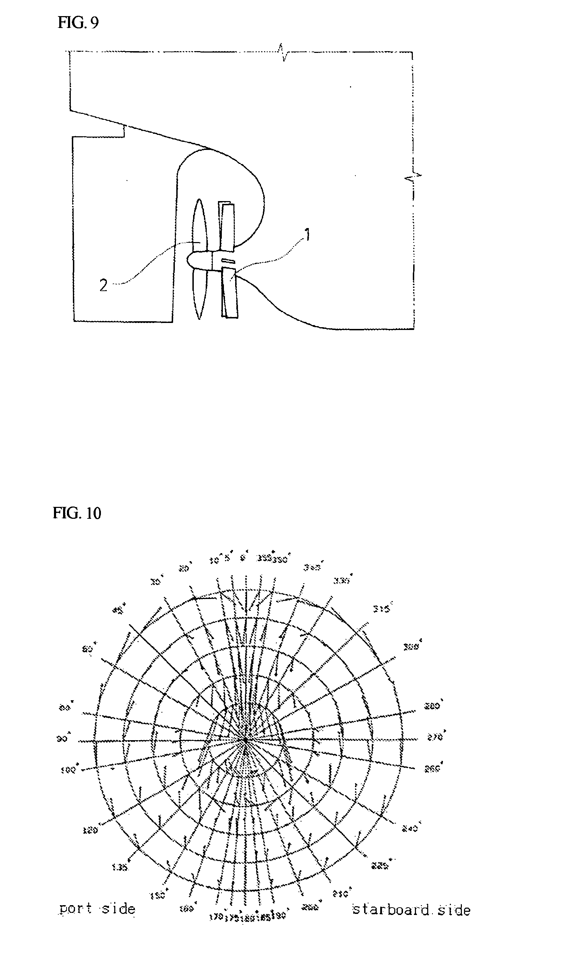

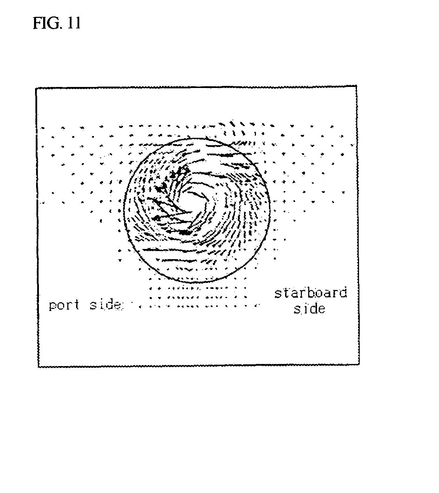

In a low-speed full ship, as shown in FIG. 10, an upward velocity due to the shape of the stem on the plane of a propeller is increased, and tangential velocities, induced by the ship on the port and starboard sides, vary angles of attack of a flow coming into the propeller. Accordingly, in case that flow velocities at the rear of the propeller are measured, the flow velocities on the port and starboard sides vary, as shown in FIG. 11.

When a preswirl stator, which is installed for the purpose of improving the efficiency of the propeller due to the recovery of rotary energy of the propeller, has a symmetrical structure, tangential velocity cancellation on the starboard side is relatively unnecessarily increased.

ES-A-2 075 785 disclosed a preswirl stator with three blades on each side of the center line and which are disposed symmetrically in relation to this center line. DE-U-83 14 111 discloses a preswirl stator comprising two blades on one side of the center line, or two blades on each sides of the center line and which are disposed symmetrically in relation to this center line, or one blade on each side of the center line. US 4 798 547 discloses an asymmetric preswirl stator.

The present invention proposes a solution to improve the efficiency and the cavitation property of the propeller of the ship.

The invention provides an asymmetric preswirl stator according to claim 1. Other aspects of the invention an described in the other claims.

The above and other objects, features and other advantages of the present invention will be more clearly understood from the following detailed description taken in conjunction with the accompanying drawings, in which :
FIG. 1 is a perspective view of an asymmetric preswirl stator in accordance with a first embodiment of the present invention in an installed state ;
FIG. 2 is a side view of the asymmetric preswirl stator in accordance with the first embodiment of the present invention in the installed state.
FIG. 3 is a front view of the asymmetric preswirl stator in accordance with the first embodiment of the present invention ;
FIG. 4 is a side view of an essential part of the asymmetric preswirl stator in accordance with the first embodiment of the present invention ;
FIG. 5 is a perspective view of an asymmetric preswirl stator in accordance with a second embodiment of the present invention in an installed state ;
FIG. 6 is a side view of the asymmetric preswirl stator in accordance with the second embodiment of the present invention in the installed state ;
FIG. 7 is a front view of the asymmetric preswirl stator in accordance with the second embodiment of the present invention;
FIG. 8 is a side view of an essential part of the asymmetric preswirl stator in accordance with the second embodiment of the present invention;
FIG. 9 is a side view of a conventional preswirl stator in an installed state; and
FIG. 10 is a diagram showing tangential velocities on the plane of a propeller of a general low-speed full ship; and
FIG. 11 is a diagram showing flow velocities measured at the rear of the propeller of the general low-speed full ship.

Hereinafter, an asymmetric preswirl stator in accordance with a first embodiment of the present invention will be described in detail with reference to the annexed drawings.

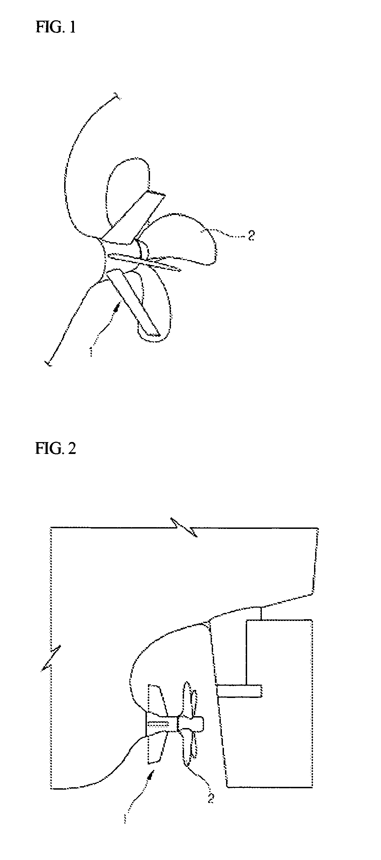

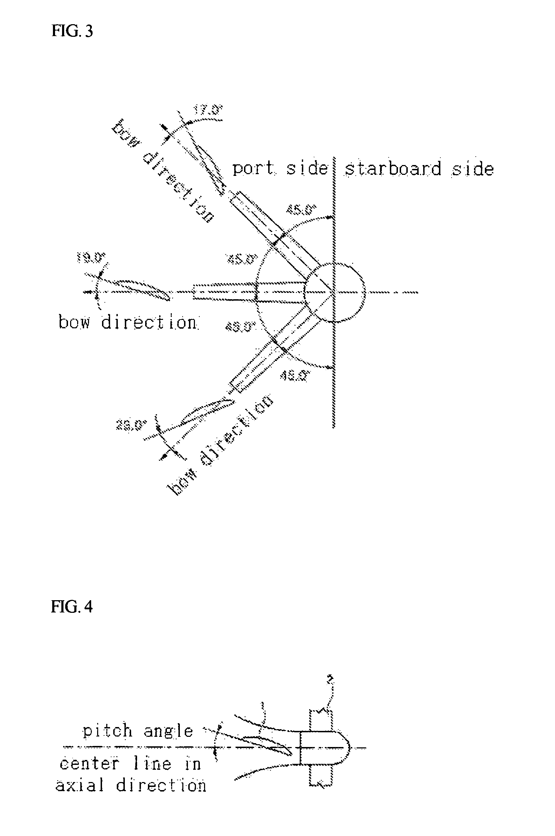

FIG. 1 is a perspective view of an asymmetric preswirl stator in accordance with a first embodiment of the present invention in an installed state, FIG. 2 is a side view of the asymmetric preswirl stator in accordance with the first embodiment of the present invention in the installed state, FIG. 3 is a front view of the asymmetric preswirl stator in accordance with the first embodiment of the present invention, and FIG. 4 is a side view of an essential part of the asymmetric preswirl stator in accordance with the first embodiment of the present invention.

An asymmetric preswirl stator 1 in accordance with the first embodiment comprises three blades, which are installed only on the port side of a ship from a center line in an axial direction such that the three blades are radially disposed at intervals of 45 degrees, thus improving the efficiency and the cavitation property of a propeller 2.

As shown in FIG. 3, in the asymmetric preswirl stator 1, three blades are installed on the port side of the ship, and any blade is not installed on the starboard side of the ship.

That is, since any blade is not installed on the starboard side of the ship, an axial velocity component on the starboard side becomes fast and the disturbance of a flow of water coming into the propeller 2 disappears. Thereby, the load distribution on the propeller 2 becomes uniform, and thus the efficiency and the cavitation property of the propeller 2 are improved.

More specifically, the three blades are installed at intervals of 45 degrees on the port side, and any blade is not installed on the starboard side. Preferably, among the blades installed on the port side, the uppermost blade has the smallest pitch angle with the center line in the axial direction, the lowermost blade has the largest pitch angle, and the middle blade has a pitch angle between the above two angles of the uppermost and lowermost blades.

Most preferably, the pitch angles of the uppermost, middle, and lowermost blades with the center line in the axial direction are respectively 17, 19, and 23 degrees.

The asymmetric preswirl stator 1 having the above installation structure of the first embodiment of the present invention has an improvement of 3~4 % in efficiency, compared with a conventional preswirl stator, and a reduction of approximately 40 tons in weight, compared with a conventional symmetric reaction pin, thus being economically advantageous. Further, since the load distribution on the propeller 2 becomes uniform, the efficiency and the cavitation property of the propeller 2 are improved.

Hereinafter, an asymmetric preswirl stator in accordance with a second embodiment of the present invention will be described in detail with reference to the annexed drawings.

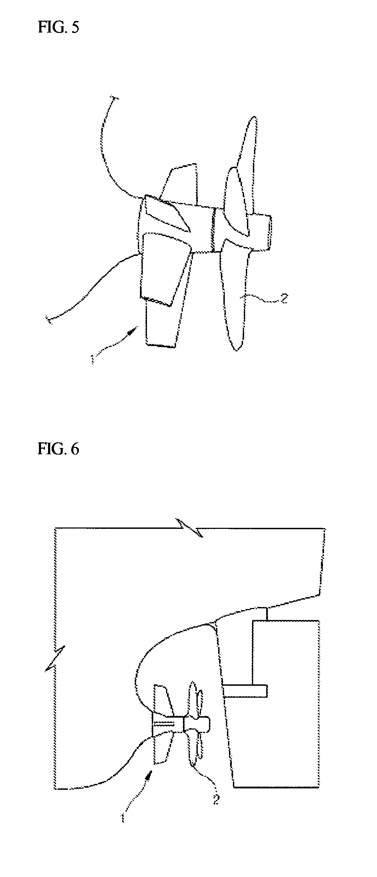

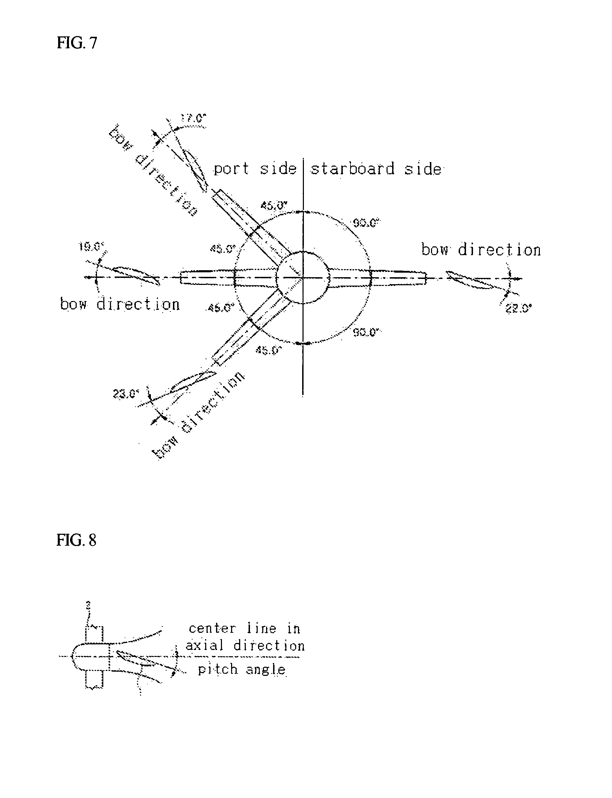

FIG. 5 is a perspective view of an asymmetric preswirl stator in accordance with a second embodiment of the present invention in an installed state, FIG. 6 is a side view of the asymmetric preswirl stator in accordance with the second embodiment of the present invention in the installed state, FIG. 7 is a front view of the asymmetric preswirl stator in accordance with the second embodiment of the present invention, and FIG. 8 is a side view of an essential part of the asymmetric preswirl stator in accordance with the second embodiment of the present invention.

An asymmetric preswirl stator 1 in accordance with the second embodiment comprises blades, which are radially installed on port and starboard sides of a ship from a center line in an axial direction such that three blades are radially disposed on the port side and one blade is disposed on the starboard side, thus improving the efficiency and the cavitation property of a propeller 2.

In the asymmetric preswirl stator 1 having the above structure, the three blades are radially disposed at intervals of 45 degrees on the port side. More specifically, the uppermost blade has a pitch angle of 17 degrees with the center line in the axial direction, the lowermost blade has a pitch angle of 23 degrees, and the middle blade has a pitch angle between the above two angles of the uppermost and lowermost blades, i.e. a pitch angle of 19 degrees. On the other hand, one blade is horizontally disposed on the starboard side.

As shown in FIG. 7, since a considerable amount of the tangential velocity on the starboard side is canceled by the hull of the ship, three blades are installed on the port side and one blade is installed on the starboard side.

The above asymmetric preswirl stator 1 having one blade installed on the starboard side increases the axial velocity component on the starboard side, and thus makes the load distribution on the propeller 2 uniform, thereby improving the efficiency and the cavitation property of the propeller 2.

More specifically, three blades are installed at intervals of 45 degrees on the port side, and one blade is horizontally installed on the starboard side. Preferably, among the three blades installed on the port side, the uppermost blade has the smallest pitch angle with the center line in the axial direction, the lowermost blade has the largest pitch angle, and the middle blade has a pitch angle between the above two angles of the uppermost and lowermost blades. Further, preferably, the blade installed on the starboard side has a pitch angle of 22 or 28 degrees with the center line in the axial direction.

The asymmetric preswirl stator 1 having the above installation structure of the second embodiment of the present invention has an improvement of 1~2% in efficiency, compared with a conventional preswirl stator, and a reduction of approximately 25 tons in weight, compared with a conventional symmetric reaction pin, thus being economically advantageous. Further, since the load distribution on the propeller 2 becomes uniform, the efficiency and the cavitation property of the propeller 2 are improved.

Hereinafter, an asymmetric preswirl stator in accordance with a third embodiment of the present invention will be described in detail with reference to the annexed drawings.

As apparent from the above description, the present invention provides an asymmetric preswirl stator, which is installed in front of a propeller of the stem of a low-speed full ship for improving a speed capacity of the ship, and has various asymmetric structures in consideration of wake current characteristics of the hull of the ship and a rotational direction of the propeller, thereby making the load distribution on the propeller uniform, and thus improving the efficiency and the cavitation property of the propeller.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. Asymmetric preswirl stator (1) of a ship, comprising three blades radially installed at intervals of 45 degrees on the port side of the ship from a center line in an axial direction to improve the efficiency and the cavitation property of a propeller of the ship, **characterized in that** the pitch angles of the uppermost, middle, and lowermost blades installed on the port side with the centreline in the axial direction are respectively 17, 19 and 23 degrees.

2. Asymmetric preswirl stator (1) according to claim 1, **characterised in that** it comprises a further blade installed on the starboard side of the ship from a centreline in the axial direction.

3. Asymmetric preswirl stator (1) according to claim 2, **characterised in that** said blade installed on the starboard side is horizontally disposed at the center line in the axial direction and has a pitch angle of 22 degrees.

## Patentansprüche

1. Asymmetrischer Pre-Swirl-Stator (1) eines Schiffes, der drei Blätter umfasst, die radial in Intervallen von 45 Grad backbord des Schiffes von einer Mittellinie in einer Achsenrichtung montiert sind, um den Leistungsgrad und die Kavitationseigenschaft eines Propellers des Schiffes zu verbessern, **dadurch gekennzeichnet, dass** die Einstellwinkel des obersten, des mittleren und des untersten Blatts, die backbord mit der Mittellinie in der Achsenrichtung montiert sind, 17, 19 bzw. 23 Grad betragen.

2. Asymmetrischer Pre-Swirl-Stator (1) nach Anspruch 1, **dadurch gekennzeichnet, dass** er weiterhin ein weiteres Blatt umfasst, das steuerbord des Schiffes von einer Mittellinie in der Achsenrichtung montiert ist.

3. Asymmetrischer Pre-Swirl-Stator (1) nach Anspruch 2, **dadurch gekennzeichnet, dass** das Blatt, das steuerbord montiert ist, horizontal an der Mittellinie in der Achsenrichtung angeordnet ist und einen Einstellwinkel von 22 Grad aufweist.

## Revendications

1. Stator de tourbillon asymétrique (1) pour un navire, comportant trois lames disposées radialement à des intervalles de 45° sur le côté bâbord du navire à partir d'une ligne centrale dans une direction axiale pour améliorer l'efficacité et la propriété de cavitation d'une hélice du bateau, **caractérisé en ce que** les angles de pas de la lame la plus élevée, de la lame intermédiaire, et de la lame la plus basse qui sont installées sur le côté bâbord du navire avec la ligne centrale dans la direction axiale sont respectivement 17, 19 et 23 degrés.

2. Stator de tourbillon asymétrique (1) selon la revendication 1, **caractérisé en ce qu'**il comporte en outre une lame installée sur le côté tribord du navire à partir d'une ligne centrale dans une direction axiale.

3. Stator de tourbillon asymétrique (1) selon la revendication 2, **caractérisé en ce que** ladite lame installée du côté tribord est disposé horizontalement à la ligne centrale dans la direction axiale et a un angle de pas de 22 degrés.
